# NEUE EUROPÄISCHE PATENTSCHRIFT

(11) **EP 0 564 912 B2**
(45) Veröffentlichungstag und Bekanntmachung des Hinweises auf die Entscheidung über den Einspruch: **01.10.2003**
(45) Hinweis auf die Patenterteilung: 17.04.1996
(21) Anmeldenummer: 93104867.2
(22) Anmeldetag: 24.03.1993
(51) Int. Cl.: D21H 17/57, D21H 17/08

(54) **Verfahren zur Nassverfestigung von Papier**
Paper wet-strengthening process
Procédé pour augmenter la resistance du papier à l'état humide

(30) Priorität: 06.04.1992 DE 4211480
(43) Veröffentlichungstag der Anmeldung: 13.10.1993
(73) Patentinhaber: BAYER AG, 51368 Leverkusen (DE)
(72) Erfinder: Träubel, Harro, Dr., W-5090 Leverkusen 1 (DE); Laas, Hans-Josef, Dr., W-5000 Köln 60 (DE); Reiff, Helmut, Dr., W-5090 Leverkusen 1 (DE); König, Joachim, Dr., W-5068 Odenthal (DE); Reiners, Jürgen, Dr., W-5090 Leverkusen 1 (DE); Faika, Harald, W-4150 Krefeld (DE)

(56) Entgegenhaltungen:
- EP-A- 0 140 537
- US-A- 3 589 978
- US-A- 3 996 154
- US-A- 4 663 377
- US-A- 4 670 100

## Beschreibung

Die vorliegende Erfindung betrifft ein Verfahren zur Herstellung von trockenfest und naßfest ausgerüstetem Papier.

Es ist seit langem bekannt, Umsetzungsprodukte von Polyamidaminen und/oder Polyaminen mit Epichlorhydrin zur Verbesserung der Naßfestigkeit von Papier einzusetzen.

Diese bekannten Naßfestmittel weisen aber einen bestimmten Gehalt an organisch gebundenem Chlor auf.

Der organische Chlorgehalt setzt sich zusammen aus einem Anteil an Chlorhydrinfunktionen und einem Chloranteil, der aus niedermolekularen Nebenkomponenten stammt, die während der Synthese aus Epichlorhydrin gebildet werden.

Bei der Anwendung als Naßfestmittel wird eine wäßrige Lösung des Polykondensats zu einer Zellstoffsuspension gegeben, aus der durch Entwässerung des Papierblatt gebildet wird. Dabei gelangt ein bestimmter Anteil an organischen Halogenverbindungen in das Abwasser der Papierfabrikation, wo er als sog. AOX-Wert erfaßt werden kann (DIN 38 409, Teil 14).

Es ist bekannt, daß die Zugfestigkeit (trocken und naß) von Papier, Pappe etc. durch Zusatz eines basischen Polyurethans verbessert werden kann (vergl. DE-A-3102 038).

Weiterhin sind Verfahren zur Naßfestausrüstung von Papier bekannt, wobei Prepolymere aus Polyisocyanaten mit NCO-Gruppen verschiedener Reaktivität (z.B. aus TDI) aus Lösung in Gegenwart von Katalysatoren auf das trockene Papier appliziert werden (vergl. z.B. US-A-3 702 781).

Auch wäßrige Dispersionen von Isocyanatprepolymeren, deren Isocyanatgruppen blockiert sind, wurden zum Imprägnieren von Papier vorgeschlagen, um seine Trocken- und Naßfestigkeit zu erhöhen (vergl. EP-A-17 598).

Auch das Imprägnieren von Papier zum.Zweck der Naß- und Trockenverfestigung, mit Gemischen von Polyalkohol, Isocyanat und Polyamin, die im Papier auszuhärten vermögen, wurde beschrieben (vergl. DE-A-2 264 699).

Kationische Copolymere mit.lsocyanat- und primären Amingruppen, die durch Hoffmann-Abbau von Copolymeren des (Meth)acrylamids etc. erhalten werden können, sind in der Masse eingesetzt, nach Hitzebehandlung, ebenfalls geeignet Papier zu verfestigen (vergl. JPA-57 149).

Die US-PS 3 589 978 betrifft die Herstellung von wasserabstoßendem Papier mit hohen Naßfestigkeit unter Verwendung von Polyisocyanaten auf Basis polymerisierter C₁₆-C₂₂-Fettsäuren. Wie in Spalte 8, Zeilen 50-52 empfohlen wird, soll man das Isocyanat zusammen mit einem Emulgator einsetzen. Dementsprechend wird in den beiden Beispielen auchnicht Dimerylisocyanat als solches, sondern in Kombination mit einem Emulgator eingesetzt. Dies spricht dafür, daß die nach US-A-3 589 978 zu verwendenden Polyisocyanate nicht selbstdispergierend sind.

Stand der Technik ist also einerseits das Behandeln von Papier mit Polyisocyanaten in Kombination mit einem Emulgator oder mit verkappten Isocyanaten oder sonstigen, reaktiven Gemischen, die sich im Substrat zum Polyurethan umzusetzen vermögen, andererseits werden für diesen Zweck Melamin-Formaldehyd- oder Harnstoff-Formaldehyd-Kondensäte beziehungsweise Polyarnidamin-Epichlorhydrin-Harze verwandt (Ullmann's Encyklopädie der technischen Chemie, Weinheim, Bd. 17, 1979⁴, Seite 585).

Konventionell aufgebaute Naßfestmittel sind oft quaternierte Polyamide, -imide etc. Die kationische Struktur dieser Produkte soll dafür verantwortlich sein,.daß sie auf die Cellulosefaser aufziehen (R. Petzer et al. Wochenblatt für Papierfabrikation, 11/12 (1989) S. 499).

Diese aus dem Stand der Technik bekannten Verfahren zur Naß- oder Trockenverfestigung von Papier sind jedoch nicht in allen Anforderungen zufriedenstellend, insbesondere im Hinblick auf den organischen Halogsngehatt (OX-Gehalt) der eingesetzten Produkte und die dadurch bedingte AOX-Belastung (AOX = adsorbierbares organisches Halogen) des Abwassers der Papierfabriken.

Es bestand daher die Aufgabe, ein neues Verfahren zur Naßfestausrüstung von Papier und papierähnlichem Materiaf bereitzustellen, wobei ein halogenfreies Naßfestmittel auf Basis wasserdispergierbarer Polyisocyanate eingesetzt wird, das beim Einsatz in der Masse und in der Oberfläche in einem breiten pH-Bereich die Naßfestwirkung herkömmlicher Näßfestmittel auf Basis Polyamidamin-epichlorhydrinharz erreicht und auch die Trockenfestigkeit erhöht.

Es wurde nun überraschend gefunden, daß sich in Wasser selbstdispergierende Polyisocyanate hervorragend als Trocken- und Naßfestmittel für Papier eignen, wobei der Einsatz vor der Blattbildung (Masse-Einsatz), d.h. als Zusatz zur Faserstoff-Suspension, sowie in der Oberfläche, d.h. als Auftrag auf ein bereits gebildetes Papierblatt, erfolgen kann.

Die vorliegende Erfindung betrifft also ein Verfahren zur Herstellung von trockenfest und naßfest ausgerüstetem Papier und papierähnlichem Material, dadurch gekennzeichnet, daß das Papier oder papierähnliche Material oder die zur Herstellung des Papiers oder des papierähnlichen Materials verwendete Pulpe in Wasser selbstdisgierenden Polyisocyanaten behandelt wird, wobei als in Wasser selbstdispergierende Polyisocyanate
(I) wasserdispergierbare nichtionische Polyisocyanatgemische aus Polyisocyanaten und Polyether-modifizierten Polyisocyanaten mit cycloaliphatisch und/oder aliphatisch gebundenen Isocyanatgruppen, oder
(II) Polyisocyanatgemische aus Polyisocyanaten und Carboxylatgruppen-modifizierten Polyisocyanaten mit cyclo-aliphatisch und/oder aliphatisch gebundenen Isocyanatgruppen und die wasserdispergierbaren Polyisocyanate im Gemisch mit 1 bis 400 Gew.-Teilen, vorzugsweise 10 bis 100 Gew.-Teilen eines Polyamidamin-Epichlorhydrin-Harzes, bezogen auf das Polyisocyanat, eingesetzt werden.

Vorzugsweise eingesetzt werden wasserdispergierbare Polyisocyanatgemische (1) mit
a) einer mittleren NCO-Funktionalität von 1,8 bis 4,2,
b) einem Gehalt an aliphatisch und/oder cycloaliphatisch gebundenen Isocyanatgruppen (berechnet als NCO, Molekulargewicht = 42) von 12,0 bis 21,5 Gew.-%, bezogen auf das Polyisocyanatgemisch (1), und
c) einem Gehalt an innerhalb von Polyetherketten angeordneten Ethylenoxideinheiten (berechnet als C₂H₄O, Molekulargewicht = 44) von 2 bis 20 Gew.-% bezogen auf Polyisocyanatgemisch (1), wobei die Polyetherketten im statistischen Mittel 5 bis 70 Ethylenoxideinheiten aufweisen.

Die wasserdispergierbaren Polyisocyanatgemische (1) können in an sich bekannter Weise durch Umsetzung einer Polyisocyanatkomponente A) mit einer (mittleren) NCO-Funktionalität von 2,1 bis 4,4, vorzugsweise 2,3 bis 4,3, bestehend aus mindestens einem Polyisocyanat mit ausschließlich aliphatisch und/oder cycloaliphatisch gebundenen Isocyanatgruppen mit einem ein- oder mehrwertigen, im statistischen Mittel 5,0 bis 70 Ethylenoxideinheiten aufweisenden Polyalkylenoxidpolyetheralkohoi B) unter Einhaltung eines NCO/OH-Äquivalentverhättnisses von mindestens 2:1; im allgemeinen von 4:1 bis ca. 1000:1, wobei im übrigen Art und Mengenverhältnisse der genannten Ausgangskomponenten so gewählt werden, daß die resultierenden Umsetzungsprodukte den oben unter a) bis c) genannten Bedingungen entsprechen.

Es handelt sich bei den Polyisocyanatkomponenten A) um solche mit Uretdion-und/oder Isocyanurat-, Urethan- und/oder Allophanat-, Biuret- oder Oxadiazinstruktur, wie sie beispielsweise in DE-A-1 670 666, DE-A-3 700 209 und DE-A-3 900 053 oder in EP-A-336 205 und EP-A-339 396 beschrieben sind, die durch Modifizierung einfacher aliphatischer und/oder cycloaliphatischer hergestellt werden können.

Geeignete Diisocyanate zur Herstellung solcher Potyisocyanatkomponenten A) sind grundsätzlich solche des Molekulargewichtsbereichs 140 bis 400 mit aliphatisch und/oder cycloaliphatisch gebundenen Isocyanatgruppen, wie z B. 1,4-Diisocyanatobutan, 1,6-Diisocyanatohexan, 1,5-Diisocyanato-2,2-dimethylpentan, 2,2,4-beziehungsweise 2,4,4-Trimethyl-1,6-diisocyanatohexan, 1,10-Diisocyanatodecan, natodecan, 1,3- und 1,4-Diisocyanatocyclohexan, 1-Isocyanato-3,3,5-trimethyl-5-isocyanatomethylcyclohexan (Isophorondiisocyanat) und 4,4'-Diisocyanatodicyclohexylmethan oder beliebige Gemische solcher Diisocyanate. Generell könnten auch aromatische Isocyanate.wie z.B. Toluylendiisocyanat, 4,4'-Diisocyanato-diphenylmethan eingesetzt werden; wegen deren mangelhafter Lichtechtheit und zu hoher Reaktivität gegenüber Wasser sind jedoch die aliphatischen Isocyanate bevorzugt. Von gewissem Interesse sind allerdings Mischtrimerisate aliphatischer und aromatischer Diisocyanats.

Bevorzugt handelt es sich bei den zur Herstellung der wasserdispergierbaren Polyisocyanatgemische eingesetzten Ausgangskomponenten A) um im wesentlichen aus trimeren 1,6-Diisocyanatohexan und/ oder dimeren 1,6-Diisocyanatohexan bestehende Isocyanuratgruppen und/oder Uretdion- und/oder Biuretgruppen aufweisende Polyisocyanatgemische mit einem NCO-Gehalt von 19 bis 24 Gew.-%, bezogen auf Komponente A). Besonders bevorzugt werden als Komponente A) die entsprechenden, weitgehend Uretdiongruppenfreien, Isocyanurat- oder Biuretgruppen aufweisenden Polyisocyanate des genannten NCO-Gehalts eingesetzt, wie sie durch an sich bekannte; katalytische Trimerisierung von 1,6-Diisocyanatohexan erhalten werden und die vorzugsweise eine (mittlere) NCO-Funktionalität von 2,2 bis 4,2 aufweisen. Anstelle der Trimerisate können auch Biurete (die in bekannter Weise durch gezielte Umsetzung mit Wasser erhalten werden) oder Oligourethane, wie sie z.B. durch Umsetzung der Diisocyanate mit Trimethylolpropan, Pentaerythrit oder Sorbit entstehen, verwendet werden.

Bei der Komponente B) handelt es sich um ein- oder mehrwertige im statistischen Mittel pro Molekül 5 bis .70, vorzugsweise 6 bis 60 Ethylenoxydeinheiten aufweisende Polyalkylenoxidpolyetheralkohole, wie sie in an sich bekannter Weise durch Alkoxylierung geeigneter Startermoleküle zugänglich sind.

Zür Herstellüng der Polyetheralkohole B) können beliebige ein- oder mehrwertige Alkohole des Molekulargewichtsbereichs 32 bis 150, wie sie beispielsweise auch gemäß EP-A 206 059 Verwendung finden, als Startermoleküle eingesetzt werden, Bevorzugt werden als Startermoleküle monofunktionelle aliphatische Alkohole mit 1 bis 4 Kohlenstoffatomen verwendet. Besonders bevorzugt ist die Verwendung von Methanol.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können.

Bei den Polyalkylenoxidpolyetheralkoholen B) handelt es sich entweder um reine Potyethylenoxidpolyether oder um gemischte Polyalkylenoxidpolyether, die jeweils mindestens eine Polyetherkette enthalten, die mindestens 5, im allgemeinen 5 bis 70, vorzugsweise 6 bis 60 und besonders bevorzugt 7 bis 20 Ethylenoxideinheiten aufweist und deren Alkylenoxideinheiten zu mindestens 60 Mol-%, vorzugsweise zu mindestens 70 Mol-% aus Ethylenoxideinheiten bestehen.

Bevorzugte Polyetheralkohole B) zur Herstellung der wasserdispergierbaren Polyisocyanatgemische (1) sind monofunktionelle, auf einem aliphatischen, 1 bis 4 Kohlenstoffatome aufweisenden Alkohol gestartete Polyalkylenöxidpolyether, die im statistischen Mittel 6 bis 60 Ethylenoxidainheiten enthalten. Besonders bevorzugte Polyetheralkohole B) sind reine Polyethylenglycolmonomethyletheralkohole, die im statistischen Mittel 7 bis 20 Ethylenoxideinheiten aufweisen.

Als Polyisocyanatgemische (II) werden bevorzugt Carboxylgruppen enthaltende Polyisocyanatgemische eingesetzt wie sie in der DE-A-4 001 783 beschrieben sind, die sich nach zumindest teilweiser Neutralisation der Carboxylgruppen leicht in Wasser dispergieren lassen.

Die beim erfindungsgemäßen Verfähren eingesetzten in Wasser selbstdispergierenden Polyisocyanate können zur Erleichterung der Einarbeitung in die wäßrige Phase gegebenenfalls in einem gegenüber Isocyanatgruppen inerten Lösemittel gelöst eingesetzt werden: Geeignete Lösemittel sind z.B. Ethylacetat, Butylacetat, Ethylenglykolmonomethyloder -ethyletneracetat, 1-Methoxypropyl-2-acetat, 2-Butanon, 4-Methyl-2-pentanon, Cyclohexanon, Toluol, oder deren Gemische, aber auch Lösemittel wie Propylenglykoldiacetat, Diethylengtykoldimethylether, Diethylenglykolethyl-und -butyletheracetat, N-Methylpyrrolidon und N-Msthylcaprolactam, oder Gemische solcher Lösemittel. Diese Lösemittel werden den selbstdispergierenden Polyisocyanaten gegebenenfalls in Mengen bis zu 90 Gew.-%, vorzugsweise höchstens 50 Gew.-% und besonders bevorzugt höchstens 20 Gew.-%, bezogen auf die entstehende Lösung zugesetzt. Ganz besonders bevorzugt ist jedoch die Verwendung lösemittelfreier, selbstdispergierender Polyisocyanate.

Die selbstdispergierenden Polyisocyanate kommen beim erfindungsgemäßen Verfahren in Mengen von 0,005 bis 50.Gew.-%, vorzugsweise 0,1 bis 10 Gew.-%, bezogen auf die Papiermasse zum Einsatz, vorzugsweise werden sie in der Masse eingesetzt, das heißt sie werden der Holzfaser!Cellulosefaser-Dispersion direkt zugesetzt. Vor dem Einsatz der Polyisocyanate, insbesondere wenn diese der Papierpulpe zugesetzt werden, können diese mit der 1-4fachen Menge Wasser, bezogen auf Polyisocyanat, vordispergiert werden. Dabei ermöglicht die Verwendung der Komponente (I) Verarbeitungszeiten von bis zu 24 Stunden.

Die erfindungsgemäß anzuwendenden selbstdispergierender Polyisocyanate können bei den in der Papierindustrie üblichen Verarbeitungstemperaturen eingesetzt werden. Dabei können sich je nach Temperatur unterschiedliche Verarbeitungszeiten für die erfindungsgemäß anzuwendenden Produkte ergeben. So hat man beispielsweise beim Polyisocyanat aus Beispiel A) bei 23-25°C relativ lange Verarbeitungszeiten, denn es liegen bei dieser Temperatur nach 5 Stunden noch ca. 60 % Isocyanatgruppen vor. Bei einer Temperatur von 35°C liegen bei Polyisocyanat A) nach 5 Stunden noch ca. 50 % und bei 50°C nach 3 Stunden noch 33 % Isocyanatgruppen vor. Die Verarbeitungszeit bei einer bestimmten Temperatur kann also durch die Wahl eines geeigneten, erfindungsgemäß anzuwendenden Polyisocyanats beeinflußt werden.

Die erfindungsgemäß zu verwendenden selbstdispergierenden Polyisocyanate sind sowohl zur Oberflächenbehandlung als auch zur Massebehandlung geeignet. Die erfindungsgemäß anzuwendenden Produkte lassen sich auch in der Leimpresse einsetzen. Auf diese Weise gelingt es, wasserfeste, öl- und benzinbeständige Papiere herzustellen.

Der pH-Wert der Cellulosemasse beziehungsweise des Papiers sollte bei Zusatz der erfindungsgemäß anzuwendenden Produkte vorzugsweise zwischen 5 und 8,5, insbesondere im neutralen Bereich liegen. PH-Werte unter 4 beziehungsweise über 9 sollten vermieden werden.

Die erfindungsgemäß anzuwendenden Produkte ermöglichen die Naßverfestigung von Papier ohne daß eine Belastung des Abwassers mit organischen Halogenverbindungen (bestimmt als AOX-Wert gemäß DIN 38 409, Teil 14) auftritt. Wie aus'den Beispielen ersichtlich ist, gelingt es außerdem, eine Verbesserung der Naßreißfestigkeit auch bei milden Trockenbedingungen direkt in der Maschine zu erzielen. Das heißt, man muß nicht - wie gewöhnlich - erhebliche Kondensations-beizehungsweise Reifezeite der Produkte in Anspruch nehmen. Weiterhin zeichnen sich die Produkte dadurch aus, daß sie normale in der Papierherstellung übliche Weißtöner in ihrer Wirksamkeit nicht hemmen.

Die Produkte können gegebenenfalls auch mit üblichen kationischen Fixiermitteln und Retentionsmitteln, bevorzugt mit Naßverfestigungsmitteln gemeinsam eingesetzt werden. Retentionsmittel im Sinne der Erfindung sind kationische Polykondensate aus Polyaminen, vorzugsweise N-Methyl-bis(3-aminopropyl)amin, mit Alkylendihalogeniden, vorzugsweise Dichlorethan. Besonders bevorzugt sind solche Retentionsmittel, die keine freien -NH- oder -NH₂-Gruppen aufweisen.

Beim Einsatz der erfindungsgemäß anzuwendenden Produkte zusammen mit konventionellen Naßlestmittein kann dadurch insbesondere die durch diese konventionellen Naßfestmittel verursachte AOX-Belastung des Abwassers gesenkt werden. Weiterhin wird dabei zumeist die Naßfestwirkung synergistisch verstärkt und die Retention von Pigmenten, Füllstoffen etc. verbessert.

Die erfindungsgemäß zu verwendenden wasserdispergierbaren Polyisocyanate können im Gemisch mit 0,005 bis 50 Gew.-Teilen, vorzugsweise 0,1 bis 10 Gew.-Teilen eines Retentionsmittels auf Basis eines kationischen.Polykondensats aus Polyaminen und Alkylendihalogeniden eingesetzt werden, wobei die Menge an Retentionsmittel auf die Papiermasse bezogen ist.

Bevorzugt werden als Polyamidamin-Epichlorhydrin-Harze solche Produkte eingesetzt, die durch Umsetzung von
(α)-mehrwertigenAminen, die pro Molekül mindestens drei Aminogruppen enthalten,
(β) C₃-C₁₀-Dicarbonsäuren,
wobei das Molverhältnis von (α) zu (β) 1:0,8 bis 1:1,4 beträgt
und anschließender Umsetzung des so erhaltenen Polyamidamins (γ) mit Epichlorhydrin, wobei pro Mol basischer Aminogruppen im Polyamidamin (γ) 1,0 bis 1,8 Mol Epichlorhydrin eingesetzt werden.

Als Dicarbonsäuren (β) werden bevorzugt gesättigte aliphatische zweibasische Carbonsäuren mit 3 bis 10 C-Atomen wie z.B. Malonsäure, Bemsteinsäure, Adipinsäure oder Azelainsäure oder Mischungen dieser Säuren eingesetzt.

Als mehrwertige Amine (α) können eine Vielzahl von Polyalkylenpotyaminen einschließlich Polyethylenpolyaminen, Polypropylenpolyaminen und Polybutylenpolyaminen verwendet werden. In den Polyalkylenpolyaminen besitzen die Alkyiangruppen mehr als 1 C-Atom, und es sind in dem Molekül zwei bis acht solcher Gruppen vertreten. Die Stickstoffatome können an benachbarte Kohlenstoffatome in der Gruppe -CₙH₂ₙ- oder an weiter entfernte Kohlenstoffatome, aber nicht an das gleiche Kohlenstoffatom gebunden sein. Es können nicht nur Polyamine wie Diethylentriamin, Triäthylentetramin, Tetraethylenpentamin, Dipropylentriamin und N-bis-(Aminopropyl)-methylamin allein verwendet werden, sondern auch Gemische derselben und deren Rohprodukte. Beispielsweise ist das Gemisch von Polyethylenpolyaminen, wie es durch Umsetzung von Ammoniak und Ethylendichlorid und Reinigung nur in dem Ausmaß der Entfernung von Chloriden, Wasser, überschüssigem Ammoniak und Ethylendiamin erhalten wird, ein sehr zufriedenstellendes Ausgangsmaterial. Produkte, welche aus einem Destillationsrückstand von dem Raffinieren der niedrign Polyethylenpolyamine hergestellt sind und im wesentlichen aus höheren Polyaminen als Tetraethylenpentamin bestehen, können auch verwendet werden.

Selbstverständlich können auch Verbindungen, welche kleinere an Stickstoff gebundene Gruppen, wie -CH₂CH₂OH, enthalten und fast immer im gewissen Ausmaße in handelsüblichen Polyaminen als Ergebnis einer Nebenreaktion bei den gewöhnlichen Verfahren vorhanden sind, nach welchen Polyalkylenpolyamine hergestellt werden, verwendet werden. Man kann auch oxyalkyisubstituierte Polyamine verwenden.

Das Verfahren zur Herstellung dieser Polyamidamin-Epichlorhydrin-Harze ist in DE-A-1 177.824 beschrieben.

Das Beispiel I beschreibt die Herstellung des Polyisocyanates, Beispiel II seine Verwendung.

### Beispiel I

### Polyisocyanat A

1,0 Val eines Isocyanuratgruppen-haltigen Polyisocyanates auf Basis von 1,6-Diisocyantohexan (HDI) mit einem NCO-Gehalt von 21,5 % und einer Viskosität von 3,000 mPas (23°C) werden bei Raumtemperatur unter Rühren mit 0,08 Val eines auf Methanol gestarteten, monofunktionellen Polyethylenoxidpolyethers mit einem mittleren Molekulargewicht von 350 versetzt und anschließend für 3 h auf 100°C erwärmt. Nach Abkühlen auf Raumtemperatur liegt ein erfindungsgemeßes, praktisch farbloses klares Polyisocyanatgemisch vor. Der NCO-Gehalt beträgt 17,3%, die Viskosität 3.050 mPas (23°C).

8 Teile des so erhaltenen Polyisocyanats werden mit 2 Teilen Propylenglykoldiacetat verdünnt. Man erhält eine 80 %ige Lösung mit einem NCO-Gehalt von 12,6% und einer Viskosität von 510 mPas.

### Beispiel II

Dieses-Beispiel zeigt die Wirksamkeit der erfindungsgemäßen Polyisocyanate in der Papiermasse.

Eine Mischung aus 50 % gebleichtem Birkensuffat-Zellstoff und 50% gebleichtem Kiefemsutfät-Zellstoff wurde bei einer Stoffdichte von 2,5 % im Holländer auf einen Mahlgrad von 30°C Schopper-Riegler gemahlen. Hiervon wurden 100 g in ein Becherglas gegeben und mit Wasser auf 1000 ml verdünnt.

Die in derfolgenden Tabelle angegebenen Mengen an Polyisocyanat A(bezogen auf Faserstoff) wurden als wäßrige Dispersion in das Becherglas gegeben.

Nach einer Rûhzeit von 3 Minuten wurden mit den Inhatten der Becherglässer auf einem Blattbildner (Rapid-Köthen -Gerät) Papierblätter mit einem Flächengewicht von ca. B0 m²/g gebildet. Die Papierblätter wurden bei 85°C 8 Minuten im Vakuum bei 30 mbar getrocknet und im Trockenschrank noch 10 Minuten bei 110°C nacherhitzt.

Aus jedem Papierblatt wurde nach der Klimatisierung 5 Prüfstreifen von 1,5 cm Breite ausgeschnitten und 5 Minuten in destilliertes Wasser eingetaucht. Danach wurden die nassen Streifen in einer Zugprüfmaschine sofort auf ihre Naßbruchiast geprüft. Außerdem wurde ein handelsübliches Naßfestmittel mit hohem organischen Chlorgehalt als Standard mitgeprüft.

Es wurde gefunden, daß das Papier mit dem erfindungsgemäßen Polyisocyanat A unkondensiert (Trocknung bei 85°C, 8 Min.) bereits eine sehr gute Naßfestigkeit aufwies. Das handelsübliche Naßfestmittel brachte die Endwerte erst nach der Kondensation (110°C, 10 Min). Es wurden folgende Ergebnisse erzielt:

| Produkt Vergleichsbeispiele | % Wirkstoff | Naßbruchlast [N] | |
|---|---|---|---|
| | | unkondensiert | kondensiert |
| Polyamidamin-Harz | 0,075 | 1,4 | 3,6 |
| Polyamidamin-Harz | 0,15 | 2,8 | 7,0 |
| Polyamidamin-Harz | 0,3 | 4,3 | 10,5 |
| Polyamidamin-Harz | 0,45 | 5,4 | 14,3 |
| Polyamidamin-Harz | 0,6 | 6,5 | 15,6 |
| Polyamidamin-Harz | 0,75 | 7,4 | 16,9 |
| Polyamidamin-Harz | 0,9 | 8,6 | 19,6 |
| Polyamidamin-Harz | 1,2 | 8,8 | 22,0 |
| Polyisocyanat A | 0,08 | 3,4 | 4,4 |
| Polyisocyanat A | 0,16 | 5,0 | 6,0 |
| Polyisocyanat A | 0,32 | 7,4 | 10,1 |
| Polyisocyanat A | 0,48 | 8,5 | 11,6 |
| Polyisocyanat A | 0,64 | 9,2 | 12,1 |
| Polyisocyanat A | 0,8 | 9,4 | 12,7 |
| Polyisocyanat A | 0,96 | 10,5 | 14,3 |
| Polyisocyanat A | 1,28 | 11,3 | 14,7 |
| Polyisocyanat A | 1,6 | 12 | 15 |

Diese Serie wurde wiederholt, mit der Änderung, daß auch das Gemisch beider Produkte geprüft wurde:

| Produkt Vergleichsbeispiele | Naßfestmittel [%] | Wirkstoff [%] | Bruchlast [N] | |
|---|---|---|---|---|
| | | | trocken | naß |
| Polyamidamin-Harz | 1 | 0,15 | 90,1 | 6,9 |
| Polyamidamin-Harz | 2 | 0,3 | 95,1 | 10,5 |
| Polyamidamin-Harz | 4 | 0,6 | 100,3 | 16 |
| Polyisocyanat A | 0,5 | 0,4 | 90,4 | 8 |
| Polyisocyanat A | 1 | 0,8 | 95,2 | 10,6 |
| Polyisocyanat A | 2 | 1,6 | 96 | 12,8 |
| Gemisch aus Polyisocyanat A | 0,5 | 0,4 | | |
| Polyamidamin-Harz | 1 | 0,15 | 100,8 | 19,5 |

Hierbei zeigt sich die synergistische Wirkung. 0,4 % Polyisocyanat A bewirkt allein eine Naßbruchlast von 8 N; 0,15 % polyamidamin-Harz bewirkt allein eine Naßbruchlast von 6,9 N, die Kombination der beiden Mittel jedoch ergibt eine Naßbruchlast von 19,5 N.

## Patentansprüche

1. Verfahren zur Herstellung von trockenfest und naßfest ausgerüstetem Papier oder papierähnlichem Material, **dadurch gekennzeichnet, daß** das Papier oder das papierähnliche Material oder die zur Herstellung des Papiers oder des papierähnlichen Materials verwendete Pulpe mit in Wasser selbstdispergierenden Polyisocyanaten behandelt wird, wobei als selbstdispergierende Polyisocyanate
(I) wasserdispergierbare nichtionische Polyisocyanatgemische aus Polyisocyanaten und Polyethermodifizierten Polyisocyanaten mit cycloaliphatisch und/oder aliphatisch gebundenen Isocyanalgruppen,
oder
(II) Polyisocyanatgemische aus Polyisocyanaten und Carboxylatgruppen-modifizierten Polyisocyanaten mit cycloaliphatisch und/oder aliphatisch gebundenen Isocyanalgruppen
eingesetzt werden, und die wasserdispergierbaren Polyisocyanate im Gemisch mit 1 bis 400 Gew. -Teilen, vorzugsweise 10 bis 100 Gew.-Teilen eines Polyamidamin-Epichlorhydrin-Harzes, bezogen auf das Polyisocyanat, eingesetzt werden.

2. Verfahren gemäß Anspruch 1 **dadurch gekennzeichnet, daß** als selbstdispergierende Polyisocyanate wasserdispergierbare Polyisocyanate (I) mit
a) einer mittleren NCO-Funklionalität von 1,8 bis 4,2,
b) einem Gehalt an aliphatisch und/oder cycloaliphatisch gebundenen isocyanatgruppen (berechnet als NCO, Molekulargewicht = 42) von 12.0 bis 21,5 Gew.-%. bezogen auf das Polyisocyanatgemisch (I), und
c) einem Gehalt an innerhalb von Polyetherketten angeordneten Ethylenoxideinheiten (berechnet als C₂H₄O. Molekulargewicht = 44) von 2 bis 20 Gew.-% bezogen auf Polyisocyanatgemisch (I), wobei die Polyetherketten im statistischen Mittel 5 bis 70 Ethylenoxideinheiten aufweisen,
eingesetzt werden.

3. Verfahren gemäß Ansprüchen 1-2, **dadurch gekennzeichnet, daß** die selbstdispergierenden Polyisocyanate in Mengen von 0.005 bis 50 Gew.-%, bezogenen auf die Papiermasse eingesetzt werden.

4. Verfahren gemäß Ansprüchen 1 bis 3, **dadurch gekennzeichnet, daß** die zur Herstellung des Papiers oder des papierähnlichen Materials verwendete Pulpe behandelt wird, indem die setbstdispergierenden Polyisocyanate als wäßrige Emulsion oder direk der Pulpe zugesetzt werden.

5. Verfahren gemäß Ansprüchen 1 bis 4, **dadurch gekennzeichnet, daß** das Papier oder das papierähnliche Material, das in Form eines fertigen Rohpapiers vorliegt, auf der Oberfläche behandelt wird.

## Claims

1. Process for the preparation of paper or paper-like material which has been given a dry-strength and wet-strength treatment, **characterised in that** the paper or paper-like material or the pulp used for the preparation of the paper or paper-like material is treated with polyisocyanates which are self-dispersing in water, the self-dispersing polyisocyanates used being
(I) water-dispersible non-ionic polyisocyanate mixtures of polyisocyanates and polyisocyanates modified by polyethers and containing cycloaliphatically and/or aliphatically bonded isocyanate groups,
or
(II) polyisocyanate mixtures of polyisocyanates and polyisocyanates modified by carboxylate groups and containing cycloaliphatically and/or aliphatically bonded isocyanate groups, and the water-dispersible polyisocyanates being employed in a mixture with 1 to 400 parts by weight, preferably 10 to 100 parts by weight of a polyamidoamine/epichlorohydrin resin, based on the polyisocyanate.

2. Process according to Claim 1, **characterized in that** the self-dispersing polyisocyanates used are water-dispersible polyisocyanates (I) with
a) a mean NCO functionality of 1.8 to 4.2,
b) a content of aliphatically and/or cycloaliphatically bonded isocyanate groups (calculated as NCO, molecular weight = 42) of 12.0 to 21.5% by weight, based on the polyisocyanate mixture (I), and
c) a content of ethylene oxide units situated within polyether chains (calculated as C₂H₄O, molecular weight = 44) of 2 to 20% by weight, based on the polyisocyanate mixture (I), the polyether chains having a statistical mean of 5 to 70 ethylene oxide units.

3. Process according to Claims 1 and 2, **characterized in that** the self-dispersing polyisocyanates are used in amounts of 0.005 to 50% by weight, based on the paper stock.

4. Process according to Claims 1 to 3, **characterized in that** the pulp used for the preparation of the paper or paper-like material is treated by the self-dispersing polyisocyanates being added to the pulp directly or as an aqueous emulsion.

5. Process according to Claims 1 to 4, **characterized in that** the paper or paper-like material which is in the form of a ready-produced base paper is surface treated.

## Revendications

1. Procédé pour la préparation de papier ou d'un matériau semblable à du papier équipé d'une résistance à l'état sec et d'une résistance à l'état-humide, **caractérisé en ce qu'**on traite le papier ou le matériau semblable à du papier ou la pâte utilisée pour la préparation du papier ou du matériau semblable à du papier avec des polyisocyanates autodispersibles dans l'eau, en utilisant comme polyisocyanates autodispersibles dans l'eau :
(I) des mélanges de polyisocyanates non ioniques dispersibles dans l'eau constitués de polyisocyanates et de polyisocyanates modifiés par des polyéthers présentant des groupes isocyanates liés de manière cycloaliphatique et/ou aliphatique ou
(II) des mélanges de polyisocyanates constitués de polyisocyanates et de polyisocyanates modifiés par des groupes carboxylates présentant des groupes isocyanates liés de manière cycloaliphatique et/ou aliphatique et les polyisocyanates dispersibles dans l'eau sont utilisés en mélange avec de 1 à 400 parties en poids, de préférence de 10 à 100 parties en poids d'une résine de polyamideamine-épichlorhydrine, rapportées au polyisocyanate.

2. Procédé selon la revendication 1, **caractérisé en ce qu'**on utilise comme polyisocyanates autodispersibles des polyisocyanates dispersibles dans l'eau (I) présentant
(a) une fonctionnalité NCO moyenne de 1,8 à 4,2,
(b) une teneur en groupes isocyanates liés de manière aliphatique et/ou cycloaliphatique (calculée en tant que NCO, poids moléculaire = 42) de 12,0 à 21,5 % en poids, rapportés au mélange de polyisocyanates (I), et
(c) une teneur en unités d'oxyde d'éthylène disposées à l'intérieur des chaînes de polyéthers (calculée en tant que C₂H₄O, poids moléculaire = 44) de 2 à 20 % en poids, rapportés au mélange de polyisocyanates (I), les chaînes de polyéthers présentant en moyenne statistique de 5 à 70 unités d'oxyde d'éthylène.

3. Procédé selon les revendications 1-2, **caractérisé en ce qu'**on utilise les polyisocyanates autodispersibles dans des quantités de 0,005 à 50 % en poids, rapportés à la masse de papier.

4. Procédé selon les revendications 1 à 3, **caractérisé en ce qu'**on traite la pâte utilisée pour la préparation du papier ou du matériau semblable à du papier en ajoutant les polyisocyanates autodispersibles en tant qu'émulsion aqueuse ou directement à la pâte.

5. Procédé selon les revendications 1 à 4, **caractérisé en ce qu'**on traite sur la surface le papier ou le matériau semblable à du papier, qui est présent dans la forme d'un papier brut fini.
